# FASCICULE DE BREVET EUROPEEN

(11) **EP 2 108 570 B1**
(45) Date de publication et mention de la délivrance du brevet: **22.06.2011**
(21) Numéro de dépôt: 09154905.5
(22) Date de dépôt: 11.03.2009
(51) Int. Cl.: B62D 25/08, B60R 21/34

(54) **Partie avant de véhicule équipée d'un support de calandre biseauté**
Frontteil eines Fahrzeugs, das mit einer Halterung für einen abgeschrägten Kühlergrill ausgestattet ist
Front part of a vehicle equipped with a bevelled grille support

(30) Priorité: 07.04.2008 FR 0852292
(43) Date de publication de la demande: 14.10.2009
(73) Titulaire: PEUGEOT CITROËN AUTOMOBILES S.A., 78140 Velizy Villacoublay (FR)
(72) Inventeur: Didier, Vincent M., 28210, Villemeux sur Eure (FR)
(74) Mandataire: Allain, Laurent

(56) Documents cités:
- EP-A- 1 506 907
- FR-A- 2 890 634
- FR-A- 2 897 812
- FR-A- 2 908 715
- JP-A- 7 285 461

## Description

Le domaine technique de l'invention concerne les parties avant de véhicules automobiles, conçues pour minimiser les dommages corporels subis par un piéton, lors d'un choc frontal. En effet, dans le cadre de la sécurité passive, la face avant des véhicules est étudiée de façon à préserver le piéton lors d'un choc à 40km/h. Pour caractériser l'aptitude du véhicule à protéger efficacement le piéton, les instances compétentes, qui définissent notamment les critères de sécurité, distinguent trois zones du corps humain susceptibles d'entrer en contact avec le véhicule : la tête, le fémur et le tibia, correspondant respectivement à un impact avec le capot, la calandre et le pare-chocs de ce véhicule. Généralement et de façon schématique, deux solutions sont retenues pour réduire ces dommages corporels: soit élaborer des pièces en partie avant de véhicule, à partir de matériaux déformables ou amortissants, et aptes à se déformer ou se casser lors d'un choc avec un piéton, soit créer des espace vides sous le capot, de manière à favoriser l'amplitude de déformation dudit capot et de la calandre, et retarder ainsi un impact avec une pièce dure. L'invention se classe dans cette deuxième catégorie, et concerne, plus spécifiquement, une partie avant de véhicule, dotée d'un support de calandre, conformé pour réduire les risques de fracture au niveau du fémur d'un piéton.

Les parties avant de véhicules automobiles, munies de pièces conçues pour minimiser les effets d'un impact de fémur de piéton, existent et ont déjà fait l'objet de brevets. On peut, par exemple, citer le brevet FR2897812, qui se rapporte à un véhicule comprenant au moins un élément de carrosserie et au moins une butée située à une hauteur supérieure à celle d'une poutre de pare-chocs du véhicule. La particularité de ces butées est qu'elles sont agencées pour s'écraser en cas de choc d'un piéton contre l'élément de carrosserie en direction de la butée. Certes, ce type de dispositif de sécurité vis-à-vis des piétons peut être efficace, mais il demeure difficile à mettre en oeuvre, car il nécessite un choix judicieux de matériaux, qu'il faut ensuite bien dimensionner en termes de taille et de géométrie. Ces contraintes entrainent forcément une augmentation des coûts en raison d'un développement long, et en raison du prix généralement élevé du matériau retenu.

Les parties avant de véhicules automobiles selon l'invention, sont prévues pour minimiser les blessures au niveau du fémur d'un piéton, soumis à un choc frontal, en proposant une géométrie particulière de support de calandre, qui accroît la distance entre le lieu d'impact sur la partie avant du véhicule et ledit support. Autrement dit, le support de calandre, qui constitue un point dur pour le piéton, se retrouve artificiellement éloigné du point d'impact tout en conservant le même emplacement sous le capot, pour favoriser la déformation du capot et de la calandre, et ainsi, mieux amortir le choc. Ce support contribue ainsi à retarder, voire à annuler, un contact du piéton avec ledit support, qui lui serait préjudiciable. Il s'agit donc d'un moyen simple, peu encombrant, et facile à mettre en oeuvre pour protéger efficacement le fémur d'un piéton ayant à subir les conséquences d'un choc frontal avec un véhicule.

La présente invention a pour objet une partie avant de véhicule automobile, comprenant notamment un capot, un ventilateur de refroidissement, un support de calandre et une calandre, ledit support étant constitué par une pièce allongée, disposée transversalement par rapport à l'axe longitudinal du véhicule, et étant situé au dessus dudit ventilateur, en retrait de la zone la plus avancée dudit capot. La principale caractéristique d'une partie avant de véhicule selon l'invention, est que le support de calandre possède une géométrie spécifique, diminuant son encombrement sous le capot, et qui agrandit la distance le séparant de la zone la plus avancée du capot, tout en conservant le même emplacement sous ledit capot. Le terme « géométrie spécifique » doit être interprété en regard d'un support de calandre déjà existant. En effet, un support de calandre a généralement une forme standard, et le support selon l'invention a fait l'objet d'un redimensionnement au niveau de sa forme et de sa taille, de manière à être moins encombrant, et à être plus éloigné du capot tout en conservant la même place sous le capot. Il faut donc en déduire qu'un support déjà existant a dû subir un « enlèvement » de matière pour parvenir à ces deux résultats. Le terme « plus éloigné » signifie que la partie du support la plus proche du capot se retrouve en position plus reculée par rapport à ce capot. Pour bien comprendre l'invention, il faut, de plus, préciser que la zone la plus avancée du capot correspond à la zone où est sensé avoir lieu l'impact du fémur du piéton. L'emplacement de cette zone d'impact est supposé être à peu près constant sur le capot, et peut être matérialisé, par exemple, par le capot et la calandre.

Avantageusement, le support est disposé horizontalement dans le véhicule, et présente une section biseautée, permettant de définir une surface inclinée située en regard de la zone la plus avancée du capot. Cette surface inclinée correspond à la principale caractéristique des parties avant de véhicule selon l'invention, car, habituellement, lesdits supports sont de géométrie plus homogène avec une section compacte sensiblement rectangulaire ou carrée.

De façon préférentielle, le support comprend une base inférieure sensiblement rectangulaire, et qui est surmontée d'une partie supérieure, dont la face avant est constituée par la surface inclinée. « L'enlèvement de matière » a lieu en partie avant de support, pour allonger la distance séparant ledit support à la zone la plus avancée du capot.

De façon avantageuse, la surface inclinée est positionnée dans l'espace, de manière à se retrouver sensiblement perpendiculaire à la direction de déformation de la zone la plus avancée du capot.

Préférentiellement, la surface inclinée constitue la partie du support la plus proche de la zone la plus avancée du capot.

Avantageusement, la surface inclinée est sensiblement parallèle à la zone la plus avancée du capot, où est supposé avoir lieu le choc du fémur du piéton.

De façon préférentielle, l'angle défini entre la surface inclinée et un plan horizontal est compris entre 30° et 70°. Cette plage tient compte des différentes géométries possibles des parties avant de véhicule, où l'emplacement relatif du support par rapport à la zone la plus avancée du capot dépend des modèles de véhicule.

De façon avantageuse, l'angle défini entre la surface inclinée et un plan horizontal, est compris entre 40° et 50°.

Préférentiellement, le support est constitué par un matériau déformable, apte à amortir le choc d'un fémur de piéton contre la zone la plus avancée du capot. Il s'agit d'une version hyper sécuritaire, qui associe l'éloignement de la pièce par rapport à l'emplacement du choc, à une aptitude à la déformation de ladite pièce.

De façon avantageuse, le rapport entre la plus petite distance séparant un support de calandre selon l'invention du point d'impact sur le capot, et la plus petite distance séparant un support de calandre conventionnelle de ce même point d'impact, est compris entre 1,2 et 1,4. Il est supposé que cette comparaison est donnée pour un même modèle de véhicule, où seule change la configuration du support de calandre, tout le reste des pièces et de leur agencement étant considérés comme constants.

L'invention se rapporte également à un support de calandre d'un véhicule automobile. La principale caractéristique d'un support de calandre selon l'invention, est qu'il est constitué par une pièce allongée comprenant une base sensiblement rectangulaire, et qui est surmontée d'une partie tronquée, ladite partie possédant à sa partie basse, une largeur égale à la largeur de la base, et possédant à sa partie haute une largeur inférieure à celle de sa partie basse, de manière à définir une surface inclinée reliant les extrémités desdites parties haute et basse, la largeur étant la dimension du support prise selon une direction parallèle aux petits cotés de la base rectangulaire. En effet, le support est une pièce autonome possédant une géométrie particulière, permettant de répondre à des exigences sécuritaires vis-vis des piétons.

Avantageusement, l'angle entre la surface inclinée et le plan de surface de la base est compris entre 40° et 50°.

Les parties avant de véhicules automobiles selon l'invention, présentent l'avantage d'offrir un haut niveau de sécurité vis-à-vis d'un choc piéton, tout en demeurant d'un coût réduit. En effet, elles font intervenir des supports de calandre de géométrie simple, ne nécessitant pas un usinage lourd, et facile à mettre en oeuvre. Elles ont également l'avantage d'être modulaires vis-à-vis d'un choc piéton, car le support peut présenter une grande variabilité de géométrie, de taille, de constitution et d'encombrement. Elles peuvent donc répondre à une multiplicité de situations, car ce support peut être intégré dans les parties de toutes sortes de véhicules automobiles.

On donne ci-après une description détaillée d'un mode de réalisation préféré d'une partie avant de véhicule selon l'invention, en se référant aux figures 1 à 5.
- La figure 1 est une vue en perspective d'un support de calandre de l'état de la technique.
- La figure 2 est une vue schématique selon l'axe longitudinal du véhicule d'une partie avant selon l'état de la technique.
- La figure 3 est une vue en perspective d'un support de calandre selon l'invention
- La figure 4 est une vue schématique selon l'axe longitudinal du véhicule d'une partie avant selon l'invention.
- La figure 5 est un diagramme comparant l'effort transmis à un support de calandre selon l'état de la technique et selon l'invention.

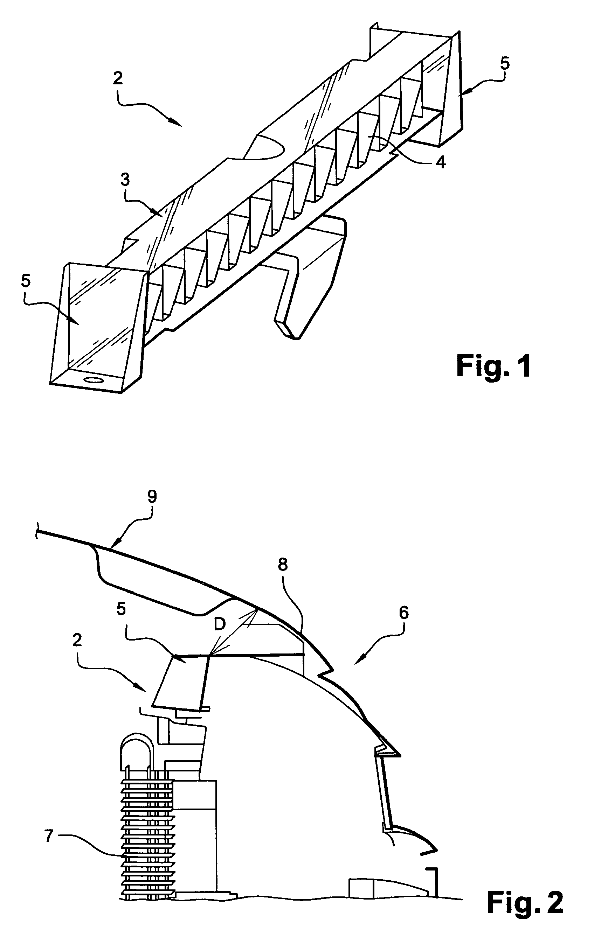

En se référant à la figure 1, un support 2 de calandre selon l'état de la technique, est constitué par une pièce allongée 3 ayant globalement une section carrée et possédant un réseau de nervures 4. Cette pièce parallélépipédique 3 comporte à chacune de ses deux extrémités, une tête plane 5 élargie prévue pour la fixation de ce support 2 de calandre sous le capot du véhicule. Ce support est rigide, et est réalisé en matériau dur. Il constitue donc une butée indéformable en cas de choc frontal.

En se référant à la figure 2, ce support 2 de calandre est positionné horizontalement dans une partie avant 6 de véhicule, et selon une direction transversale par rapport à l'axe longitudinal dudit véhicule. Ce support 2 est situé au dessus du radiateur 7 de refroidissement et légèrement en position avancée par rapport à celui-ci. Il est placé à une distance D de la zone 8 la plus avancée du capot 9, cette zone représentant le lieu d'impact potentiel d'un fémur de piéton en cas de collision accidentelle. Cette distance représente, en fait, la plus petite distance séparant ledit support 2 au point d'impact du fémur sur le capot 9 et la calandre. En cas de choc avec un piéton, cette distance D matérialise l'amplitude maximale de déformation de la zone 8 la plus avancée du capot 9, avant que le fémur ne vienne percuter ledit support 2, qui est considéré comme un point dur dangereux.

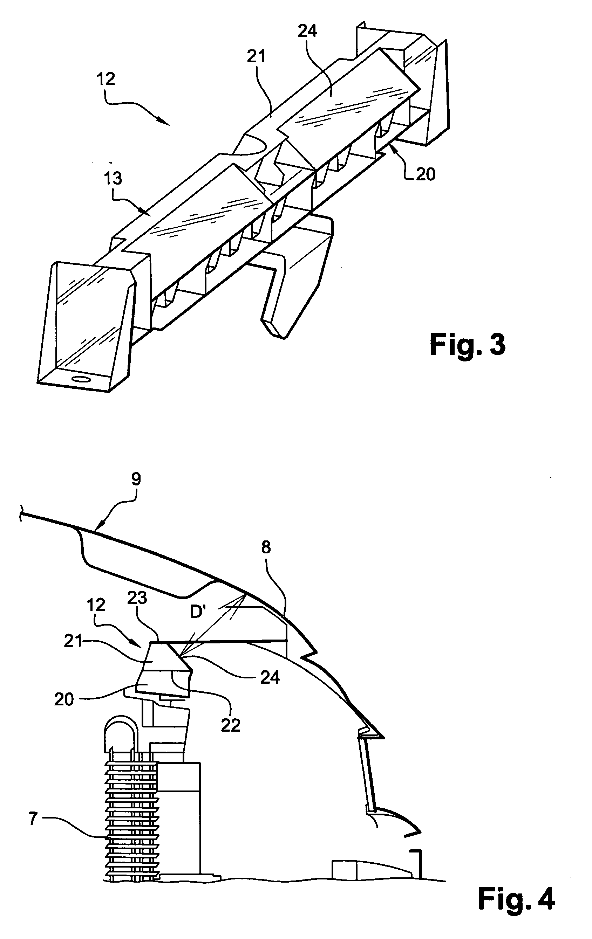

En se référant à la figure 3, un support 12 de calandre selon l'invention est constitué par une pièce allongée 13, dont la section présente une base 20 inférieure sensiblement rectangulaire, qui est surmontée d'une partie supérieure 21 en forme de triangle tronquée. En effet, cette partie supérieure 21 possède à sa partie basse 22 une largeur égale à la largeur de la base 20, et à sa partie haute 23 une largeur inférieure à celle de sa partie basse 22. Cette disposition permet de définir, pour ce support 12, une surface inclinée 24 reliant une extrémité de la partie basse 22 de la partie supérieure 21, à une extrémité de sa partie haute 23, cette surface 24 s'étendant sur toute la longueur dudit support 12. L'angle d'inclinaison de cette surface 24 par rapport au plan de surface de la base 20 vaut 45°. La largeur est la dimension du support 12 prise selon une direction parallèle à l'axe longitudinal du véhicule

En se référant à la figure 4, ce support 12 de calandre est positionné horizontalement dans une partie avant 6 de véhicule, et selon une direction transversale par rapport à l'axe longitudinal dudit véhicule. Ce support 12 est situé au dessus du radiateur 7 de refroidissement et légèrement en position avancée par rapport à celui-ci. Il est placé sous le capot 9 du véhicule, de manière à présenter sa surface inclinée 24 en regard de la zone 8 la plus avancée du capot 9. Autrement dit, cette surface inclinée 24 représente la partie la plus avancée du support 12 sous le capot 9, et se retrouve sensiblement parallèle à la zone la plus avancée 8 de ce capot 9, à une distance D' de celle-ci 8. En cas de choc avec un piéton, cette distance D'matérialise l'amplitude maximale de déformation de la zone 8 la plus avancée du capot 9, avant que le fémur ne vienne percuter ledit support 2, qui est considéré comme un point dur dangereux. Comme on peut le constater, cette distance D'est significativement supérieure à la distance D lorsque le support 2 a sa forme originelle, le rapport de ces distances pouvant atteindre 1,4.

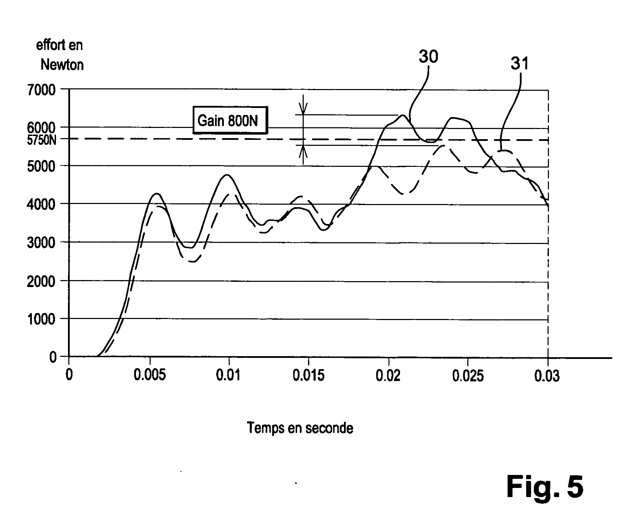

En se référant à la figure 5, la courbe 30 en trait plein représente l'effort sur la partie la plus avancée 8 du capot 9 lorsque le support 2 de calandre est conventionnel, et la courbe 31 en traits pointillés représente l'effort sur la partie la plus avancée 8 du capot 9, lorsque le support 12 de calandre est biseauté. On constate une réduction générale des efforts, pouvant atteindre 800N.

## Revendications

1. Partie avant (6) de véhicule automobile, comprenant notamment un capot (9), un radiateur (7) de refroidissement, un support (2,12)) de calandre et une calandre, ledit support (2) étant constitué par une pièce allongée (3,13), disposée transversalement par rapport à l'axe longitudinal du véhicule, et étant situé au dessus dudit ventilateur (7), en retrait de la zone (8) la plus avancée dudit capot (9), ledit support (12) de calandre possédant une géométrie spécifique, diminuant son encombrement sous le capot (9), et qui agrandit la distance le séparant de la zone la plus avancée (8) du capot (9), **caractérisé en ce que** le support (12) est disposé horizontalement dans le véhicule, et présente une section biseautée, permettant de définir une surface inclinée (24) située en regard de la zone (8) la plus avancée du capot (9).

2. Partie avant de véhicule automobile selon la revendication 1, **caractérisée en ce que** la section du support (12) comprend une base inférieure (20) sensiblement rectangulaire, et qui est surmontée d'une partie supérieure (21), dont la face avant est constituée par la surface inclinée (24).

3. Partie avant de véhicule automobile selon l'une quelconque des revendications 1 ou 2, **caractérisée en ce que** la surface inclinée (24) est positionnée dans l'espace, de manière à se retrouver sensiblement perpendiculaire à la direction de déformation de la zone la plus avancée (8) du capot (9).

4. Partie avant de véhicule automobile selon l'une quelconque des revendications 1 à 3, **caractérisée en ce que** la surface inclinée (24) constitue la partie du support (12) la plus proche de la zone la plus avancée (8) du capot (9).

5. Partie avant de véhicule automobile selon l'une quelconque des revendications 1 à 4, **caractérisée en ce que** la surface inclinée (24) est sensiblement parallèle à la zone la plus avancée (8) du capot (9).

6. Partie avant de véhicule automobile selon l'une quelconque des revendications 1 à 5, **caractérisée en ce que** l'angle défini entre la surface inclinée (24) et un plan horizontal est compris entre 30° et 70°.

7. Partie avant de véhicule automobile selon la revendication 6, **caractérisée en ce que** l'angle défini entre la surface inclinée (24) et un plan horizontal est compris entre 40° et 50°.

8. Partie avant de véhicule automobile selon l'une quelconque des revendications précédentes, **caractérisée en ce que** le support (12) est constitué par un matériau avancée (8) du capot (9).

9. Partie avant de véhicule automobile selon l'une quelconque des revendications précédentes, **caractérisée en ce que** le rapport entre la plus petite distance D' séparant un support (12) de calandre selon l'invention du point d'impact sur le capot (9), et la plus petite distance D séparant un support de calandre (2) conventionnelle de ce même point d'impact, est compris entre 1,2 et 1,4.

10. Support (12) de calandre d'un véhicule automobile qui est constituée par une pièce allongée (13), dont la section comprend une base (20) sensiblement rectangulaire, **caractérisé en ce qu'**il surmontée d'une partie tronquée (21), ladite partie (21) possédant à sa partie basse (22), une largeur égale à la largeur de la base (20), et possédant à sa partie haute 23) une largeur inférieure à celle de sa partie basse (22), de manière à définir une surface inclinée (24) reliant les extrémités desdites parties haute (23) et basse (22), la largeur étant la dimension du support (12) prise selon une direction parallèle aux petits cotés de ce rectangle.

11. Support selon la revendication 10, **caractérisé en ce que** l'angle entre la surface inclinée (24) et le plan de surface de la base (20) est compris entre 40° et 50°.

## Claims

1. Front part (6) of a motor vehicle, comprising in particular a bonnet (9), a cooling radiator (7), a grille support (2, 12) and a grille, the said support (2) being constituted by an elongated part (3, 13) disposed transversely with respect to the longitudinal axis of the vehicle, and being situated above the said ventilator (7), set back from the most forward zone (8) of the said bonnet (9), the said grille support (12) having a specific geometry, reducing the space it occupies under the bonnet (9), and which increases the distance separating it from the most forward zone (8) of the bonnet (9), **characterized in that** the support (12) is disposed horizontally in the vehicle, and has a bevelled section, allowing an inclined surface (24) to be defined, situated opposite the most forward zone (8) of the bonnet (9).

2. Front part of a motor vehicle according to Claim 1, **characterized in that** the section of the support (12) comprises a substantially rectangular lower base (20), and which is surmounted by an upper part (21), the front face of which is constituted by the inclined surface (24).

3. Front part of a motor vehicle according to any one of Claims 1 or 2, **characterized in that** the inclined surface (24) is positioned in space so as to be located substantially perpendicular to the deformation direction of the most forward zone (8) of the bonnet (9).

4. Front part of a motor vehicle according to any one of Claims 1 to 3, **characterized in that** the inclined surface (24) constitutes the part of the support (12) closest to the most forward zone (8) of the bonnet (9).

5. Front part of a motor vehicle according to any one of Claims 1 to 4, **characterized in that** the inclined surface (24) is substantially parallel to the most forward zone (8) of the bonnet (9).

6. Front part of a motor vehicle according to any one of Claims 1 to 5, **characterized in that** the angle defined between the inclined surface (24) and a horizontal plane is comprised between 30° and 70°.

7. Front part of a motor vehicle according to Claim 6, **characterized in that** the angle defined between the inclined surface (24) and a horizontal plane is comprised between 40° and 50°.

8. Front part of a motor vehicle according to any one of the preceding claims, **characterized in that** the support (12) is constituted by a forward material (8) of the bonnet (9).

9. Front part of a motor vehicle according to any one of the preceding claims, **characterized in that** the ratio between the smallest distance D' separating a grille support (12) according to the invention from the impact point on the bonnet (9), and the smallest distance D separating a conventional grille support (2) from this same impact point, is comprised between 1.2 and 1.4.

10. Grille support (12) of a motor vehicle which is constituted by an elongated piece (13), the section of which comprises a substantially rectangular base (20), **characterized in that** it is surmounted by a truncated part (21), the said part (21) having at its lower part (22) a width equal to the width of the base (20), and having at its upper part (23) a width which is smaller than that of its lower part (22), so as to define an inclined surface (24) connecting the ends of the said upper (23) and lower (22) parts, the width being the dimension of the support (12) taken according to a direction parallel to the small sides of this rectangle.

11. Support according to Claim 10, **characterized in that** the angle between the inclined surface (24) and the surface plane of the base (20) is comprised between 40° and 50°.

## Patentansprüche

1. Kraftfahrzeugvorderteil (6), der insbesondere einer Haube (9), einen Kühler (7), einen Ziergitterträger (2, 12) und ein Ziergitter aufweist, wobei der Träger (2) aus einem länglichen Teil (3, 13) besteht, der in Bezug zu der Längsachse des Fahrzeugs quer angeordnet ist und sich oberhalb des Ventilators (7) in Bezug zu dem vordersten Bereich (8) der Haube (9) nach rückwärts versetzt befindet, wobei der Ziergitterträger (12) eine spezifische Geometrie besitzt, die seinen Platzbedarf unter der Haube (9) verringert und die Entfernung vergrößert, die ihn von dem vordersten Bereich (8) der Haube (9) trennt, **dadurch gekennzeichnet, dass** der Träger (12) horizontal in dem Fahrzeug angeordnet ist und einen abgeschrägten Querschnitt aufweist, der es erlaubt, eine schräge Fläche (24) zu definieren, die sich gegenüber dem vordersten Bereich (8) der Haube (9) befindet.

2. Kraftfahrzeugvorderteil nach Anspruch 1, **dadurch gekennzeichnet, dass** der Querschnitt des Trägers (12) eine untere Basis (20) aufweist, die im Wesentlichen rechteckig ist, und auf der ein oberer Teil (21) sitzt, dessen Vorderseite aus der schrägen Fläche (24) besteht.

3. Kraftfahrzeugvorderteil nach einem der Ansprüche 1 oder 2, **dadurch gekennzeichnet, dass** die schräge Fläche (24) in dem Raum derart positioniert ist, dass sie im Wesentlichen zu der Verformungsrichtung des vordersten Bereichs (8) der Haube (9) senkrecht ist.

4. Kraftfahrzeugvorderteil nach einem der Ansprüche 1 bis 3, **dadurch gekennzeichnet, dass** die schräge Fläche (24) den Teil des Trägers (12) bildet, der dem vordersten Bereich (8) der Haube (9) am nächsten ist.

5. Kraftfahrzeugvorderteil nach einem der Ansprüche 1 bis 4, **dadurch gekennzeichnet, dass** die schräge Fläche (24) im Wesentlichen zu dem vordersten Bereich (8) der Haube (9) parallel ist.

6. Kraftfahrzeugvorderteil nach einem der Ansprüche 1 bis 5, **dadurch gekennzeichnet, dass** der zwischen der schrägen Fläche (24) und einer horizontalen Ebene definierte Winkel zwischen 30° und 70° beträgt.

7. Kraftfahrzeugvorderteil nach Anspruch 6, **dadurch gekennzeichnet, dass** der zwischen der schrägen Fläche (24) und einer horizontalen Ebene definierte Winkel zwischen 40° und 50° liegt.

8. Kraftfahrzeugvorderteil nach einem der vorhergehenden Ansprüche, **dadurch gekennzeichnet, dass** der Träger (12) aus einem vorderen Werkstoff (8) der Haube (9) besteht.

9. Kraftfahrzeugvorderteil nach einem der vorhergehenden Ansprüche, **dadurch gekennzeichnet, dass** das Verhältnis zwischen der kleinsten Entfernung D', die einen erfindungsgemäßen Ziergitterträger (12) von der Aufprallstelle auf der Haube (9) trennt, und der kleinsten Entfernung D, die einen gewöhnlichen Ziergitterträger (2) von dieser Aufprallstelle trennt, zwischen 1,2 und 1,4 liegt.

10. Ziergitterträger (12) eines Kraftfahrzeugs, der aus einem länglichen Teil (13) besteht, dessen Querschnitt eine Basis (20) aufweist, die im Wesentlichen rechteckig ist, **dadurch gekennzeichnet, dass** auf ihm ein Kegelstumpfteil (21) sitzt, wobei der Teil (21) in seinem unteren Teil (22) eine Breite besitzt, die gleich der Breite der Basis (20) ist, und in seinem oberen Teil (23) eine Breite besitzt, die kleiner ist als die seines unteren Teils (22), so dass eine schräge Fläche (24) definiert wird, die die Enden des oberen Teils (23) und unteren Teils (22) verbindet, wobei die Breite das Maß des Trägers (12) ist, das entlang einer Richtung parallel zu den kleinen Seiten dieses Rechtecks genommen wird.

11. Träger nach Anspruch 10, **dadurch gekennzeichnet, dass** der Winkel zwischen der schrägen Fläche (24) und der Flächenebene der Basis (20) zwischen 40° und 50° liegt.
